# EUROPÄISCHE PATENTSCHRIFT

(11) **EP 2 100 134 B1**
(45) Veröffentlichungstag und Bekanntmachung des Hinweises auf die Patenterteilung: **07.07.2010**
(21) Anmeldenummer: 08785594.6
(22) Anmeldetag: 18.08.2008
(51) Int. Cl.: G01N 30/00

(54) **VORRICHTUNG ZUR FELDFLUSSFRAKTIONIERUNG**
DEVICE FOR FIELD FLOW FRACTIONATION
DISPOSITIF DE FRACTIONNEMENT DE FLUX DE CHAMP

(30) Priorität: 23.08.2007 DE 102007039797
(43) Veröffentlichungstag der Anmeldung: 16.09.2009
(73) Patentinhaber: Wyatt Technology Europe Gmbh, 56307 Dernbach (DE)
(72) Erfinder: MERKEL, David, 56305 Puderbach (DE); MERKEL, Emil, 56305 Puderbach (DE); HÖHN, Sven, 56316 Niederhofen (DE)
(74) Vertreter: Podszus, Burghart
(86) Internationale Anmeldenummer: PCT/EP2008/006755
(87) Internationale Veröffentlichungsnummer: WO 2009/024303

(56) Entgegenhaltungen:
- EP-A- 0 458 188
- WO-A-99/44726
- WO-A-2005/000443
- US-A- 4 597 866

## Beschreibung

Die Erfindung betrifft eine Vorrichtung zur Feldflußfraktionierung gemäß dem Gattungsbegriff des Anspruchs 1.

Eine derartige Vorrichtung ist aus der Druckschrift WO 99/44726 bekannt. Sie besteht unter anderem aus einem einen Trennkanal enthaltenden Kanalmodul, einer Halteeinrichtung zur Fixierung des Kanalmodules mittels Befestigungselementen und einer Laminarpumpe zur Erzeugung eines laminaren Lösungsmittelstromes, in dem die zu analysierenden Partikel gelöst sind. Dabei umfaßt das Kanalmodul ein Oberteil und ein Unterteil, wobei an dem Oberteil bodenseitig ein die seitlichen Abmessungen des Trennkanales definierender folienförmiger Abstandshalter angeordnet ist, an den sich eine auswechselbare Membran und eine auswechselbare Fritte anschließen.

Die Halteeinrichtung der bekannten Vorrichtung besteht im wesentlichen aus einem Gehäuse mit einem oberen Wandbereich, an dessen inneren Oberfläche sich das Oberteil des Kanalmodules abstützt, und einer axial von einer Aufnahmeposition, bei der das gesamte Kanalmodul aus der Halteeinrichtung entnehmbar oder in diese einführbar ist, in eine Halteposition, bei welcher das Unterteil gegen das Oberteil des Kanalmodules gedrückt wird, in dem Gehäuse verschiebbar angeordneten Druckplatte. Dabei wird die Druckplatte mittels der Befestigungselemente gegen das Unterteil des Kanalmodules gedrückt, derart, daß das Kanalmodul bei seiner bestimmungsgemäßen Verwendung innerhalb der Halteeinrichtung fixiert ist.

Bei den Befestigungsmitteln soll es sich im Falle der bekannten Vorrichtung vorzugsweise um mehrere unterhalb der Druckplatte in dem Gehäuse der Halteeinrichtung verteilt angeordnete Schrauben handeln. Allerdings wird auf Seite 10, Absatz 2, der vorstehend erwähnten Druckschrift erwähnt, daß es sich bei den Befestigungsmitteln auch um Federelemente, Hydraulikelemente, Pneumatikelemente, Knebelvorrichtungen oder Hebelvorrichtungen handeln kann, wobei die Druckschrift offenläßt, wie derartige Elemente oder Vorrichtungen aufgebaut und angeordnet sein könnten.

Als ein Nachteil bei der Verwendung der in der WO 99/44726 als bevorzugt angegebenen Schrauben hat sich allerdings ergeben, daß es für den Anwender der jeweiligen Vorrichtung sehr zeitaufwendig ist, die Membran des Kanalmodules zu wechseln. Denn hierzu müssen nach dem Wechseln der Membran alle Schrauben sehr gleichmäßig und fest angezogen werden, um die vorgegebene, relativ geringe Kanalhöhe (von beispielsweise 300 µm) genau einzuhalten. Sobald nämlich die Kanalhöhe etwa durch ungleichmäßiges Anziehen der Schrauben nur geringfügig geändert wird, ergeben sich andere Kanalvolumen und damit nicht reproduzierbare Meßergebnisse für die gleichen Proben.

Der Erfindung liegt die Aufgabe zugrunde, eine Vorrichtung der eingangs erwähnten Art anzugeben, bei welcher auf einfache Weise innerhalb relativ kurzer Zeit ein Austauschen der zwischen Ober- und Unterteil des Kanalmodules auswechselbar angeordneten Teile erfolgen kann, wobei eine wesentlich bessere Reproduzierbarkeit der Messungen mit dem Kanalmodul erreichbar sein soll, als dieses mit im Handel erhältlichen bekannten Vorrichtungen der Fall ist.

Diese Aufgabe wird erfindungsgemäß durch die Merkmale des Anspruchs 1 gelöst. Weitere, besonders vorteilhafte Ausgestaltungen der Erfindung offenbaren die abhängigen Ansprüche.

Bei der erfindungsgemäßen Vorrichtung wird die an dem Unterteil des Kanalmodules anliegende Druckplatte der Halteeinrichtung nicht mittels Schrauben gegen das Unterteil gepreßt, sondern mittels mindestens eines Hydraulikzylinders. Dadurch ist es auf einfache Weise möglich, das Unterteil entsprechend einem voreinstellbaren Druck gegen das Oberteil zu drücken und durch eine Drucküberwachung immer die gleiche Anpreßkraft und somit die vorgegebene Kanalhöhe einzuhalten. Erfindungswesentlich wird dabei zur Druckübertragung das zur Fraktionierung benötigte Lösungsmittel verwendet. Hierzu ist ein Druckumsetzer vorgesehen, der im wesentlichen aus einem zylinderförmigen Edelstahlrohr besteht, das durch eine verschiebbare, nicht permeable Trennmembrane zwei Hohlräume trennt, wobei der erste Hohlraum über eine Leitung mit der Laminarpumpe verbunden ist und das Lösungsmittel enthält und der zweite mit Hydrauliköl gefüllte Hohlraum mit dem Hydraulikzylinder verbunden ist.

Durch die Verwendung des Lösungsmittels als Mittel zur Druckübertragung entfällt sowohl eine separate Pumpe zur Betätigung des Hydraulikzylinders als auch ein zusätzlicher Behälter mit einem geeigneten Druckmittel (in der Regel Öl). Die benötigten Umschalt- und Steuerventile sind vorzugsweise derart aufgebaut, daß sie in den Lösungsmittelkreislauf integriert werden können, so daß die gesamte erfindungsgemäße Vorrichtung sehr kompakt aufgebaut sein kann.

Um auf kostengünstige Weise ein schnelles Austauschen der zwischen Ober- und Unterteil des Kanalmodules angeordneten auswechselbaren Teile zu ermöglichen, hat es sich als zweckmäßig erwiesen, daß die Druckplatte von mindestens einem elastischen Rückstellelement, vorzugsweise einer Rückstellfeder, beaufschlagt wird, so daß bei einem Druckabbau in dem Hydraulikzylinder die Druckplatte automatisch in ihre Aufnahmeposition zurückgezogen wird und eine Änderung der Druckbeaufschlagung der oberen und unteren Fläche des Zylinderkolbens nicht erforderlich ist.

Bei einer Ausführungsform der erfindungsgemäßen Vorrichtung weist die Druckplatte einen U-förmigen Querschnitt auf, derart, daß die beiden Schenkel an der Innenwand des Gehäuses entlang gleitend angeordnet sind und somit der das Unterteil des Kanalmodules beaufschlagende Bereich der Druckplatte genau senkrecht zur Innenwand verschoben wird.

Um einen besonders schnellen Wechsel der zwischen Ober- und Unterteil des Karialmodules angeordneten auswechselbaren Teile vornehmen zu können, ist das Oberteil des Kanalmodules fest mit dem Gehäuse der Halteeinrichtung verbunden, so daß in der Aufnahmeposition der Druckplatte nur das Unterteil des Kanalmodules mit Fritte und Membran aus der Halteeinrichtung entnommen werden muß.

Weitere Einzelheiten und Vorteile der Erfindung ergeben sich aus dem folgenden, anhand von Figuren erläuterten Ausführungsbeispiel. Es zeigen:
Fig.1 eine schematische Darstellung einer erfindungsgemäßen Vorrichtung mit einer aus einem Kanalmodul und einer Halteeinrichtung bestehenden Einheit und
Fig.2 eine Seitenansicht des Kanalmodules mit Haltevorrichtung aus der in Fig.1 mit 11 bezeichneten Richtung.

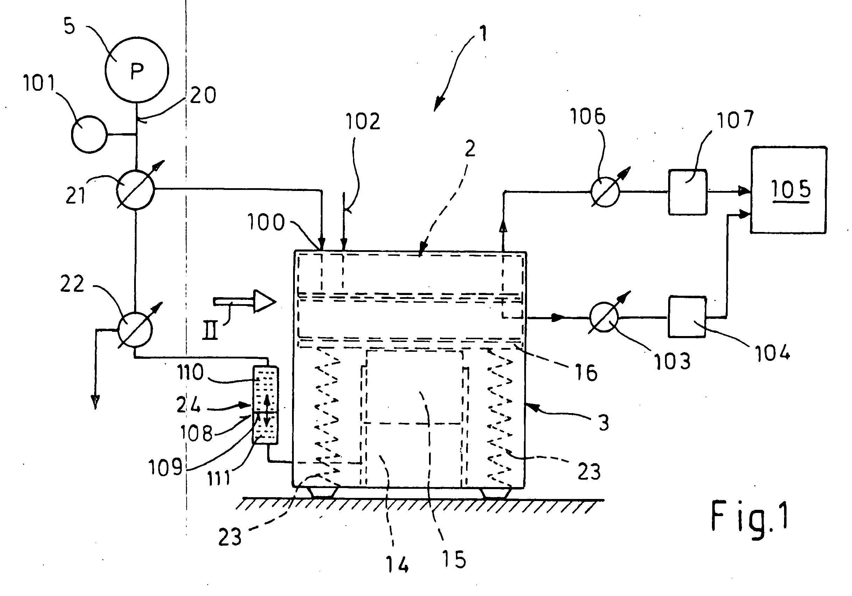

In Fig.1 ist mit 1 eine erfindungsgemäße Vorrichtung zur Assymmetrischen Fluß-Feldflußfraktionierung (AF⁴) bezeichnet. Im wesentlichen umfaßt die Vorrichtung 1 ein Kanalmodul 2, eine Halteeinrichtung 3 zur Fixierung des Kanalmodules 2 sowie eine Laminarpumpe 5, mittels welcher ein geeignetes Lösungsmittel (Trägerflüssigkeit) in einen Trennkanal 6 des Kanalmodules 2 hineingepumpt wird. Vorzugsweise ist der Einlaß 100 für das Lösungsmittel mit einem nicht dargestellten Durchfluß-Regelventil ausgestattet, und der Druck des von der Laminarpumpe kommenden Lösungsmittelstromes wird mit Hilfe eines Drucksensors 101 überwacht.

Die Probeneinspeisung erfolgt über eine Leitung 102, beispielsweise über ein nicht dargestelltes Schaltventil.

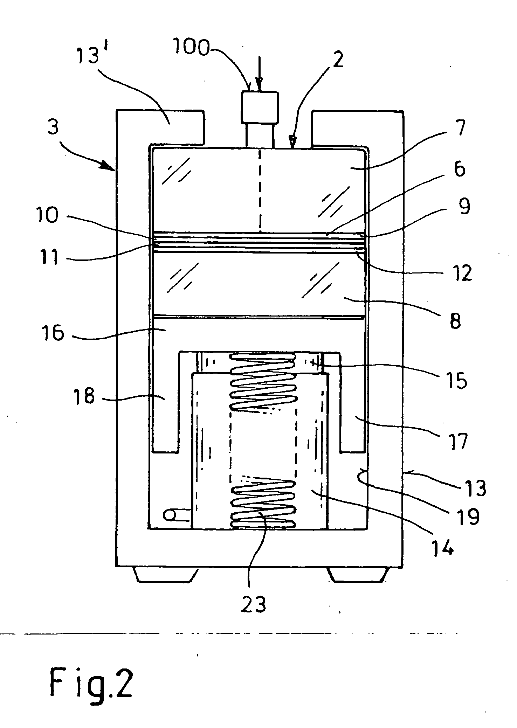

Das Kanalmodul 2 umfaßt ein Oberteil 7 und ein Unterteil 8 (Fig.2). An dem Oberteil 7 ist bodenseitig ein die seitlichen Abmessungen des Trennkanales definierender folienförmiger Abstandshalter 9 angeordnet, an den sich eine auswechselbare Ultrafiltrationsmembran 10 und eine auswechselbare Fritte 11 anschließen, so daß ein Teil des Lösungsmittelflusses in eine untere, in dem Unterteil 8 angeordnete Kammer 12 fließt und sich ein Querfluß ausbildet, der entlang des Trennkanales 6 ein definiertes Kraftfeld senkrecht zur Transportrichtung des laminaren Lösungsmittelstromes erzeugt (zur Wirkungsweise derartiger, an sich bekannter Kanalmodule vergleiche beispielsweise die eingangs erwähnte WO 99/44726). Vorzugsweise wird der Querfluß über ein Ventil 103 zu einem Fluß-Meßgerät 104 geleitet, welches über eine elektrische Leitung mit einer elektronischen Auswerteeinrichtung 105 verbunden ist.

Die mit der laminaren Strömung des Lösungsmittels durch den Trennkanal 6 durchgeleitete Probe wird nach ihrem Durchgang durch den Trennkanal über ein Ventil 106 mit einer entsprechenden, Detektoren enthaltenden Meßeinrichtung 107 verbunden, deren Meßsignale ebenfalls in der Auswerteeinrichtung 105 weiterverarbeitet werden.

Die Halteeinrichtung 3 umfaßt ein Gehäuse 13 mit einem oberen Wandbereich 13', an dem sich das mit dem Gehäuse 13 fest verbundene Oberteil 7 des Kanalmodules 2 abstützt.

In dem Gehäuse 13 der Halteeinrichtung 3 ist ein Hydraulikzylinder 14 angeordnet, dessen Kolben 15 eine in dem Gehäuse 13 unterhalb der Unterseite des Kanalmodules 2 angeordnete Druckplatte 16 beaufschlagt. Dabei ist in Abhängigkeit von dem Druck in dem Hydraulikzylinder 14 die Druckplatte 16 in dem Gehäuse 13 der Halteeinrichtung 3 axial von einer Aufnahmeposition, bei der das Unterteil 8 des Kanalmodules 2 aus der Halteeinrichtung 3 entnehmbar oder in diese einführbar ist, in eine Halteposition, bei welcher das Unterteil 8 gegen das Oberteil 7 des Kanalmodules 2 gedrückt wird, verschiebbar angeordnet.

Die Druckplatte 16 weist einen U-förmigen Querschnitt auf, derart, daß die beiden Schenkel 17, 18 nach unten gerichtet und an der Innenwand 19 des Gehäuses 13 gleitend angeordnet sind. Der das Unterteil 8 des Kanalmodules 2 beaufschlagende Bereich der Druckplatte 16 wird daher genau senkrecht zur Innenwand 19 verschoben, so daß die einander zugewandten Flächen von Ober- und Unterteil 7 und 8 gleichmäßig gegeneinander gedrückt werden.

Der Hydraulikzylinder 14, bei dem es sich vorzugsweise um einen Minihydraulikzylinder handelt, ist über einen Druckumsetzer 24, einer aus zwei Ventilen bestehenden Ventilanordnung 21, 22 und einer Druckleitung 20 ebenfalls mit der Laminarpumpe 5 zur Erzeugung des laminaren Lösungsmittelstromes in dem Trennkanal 6 verbunden. Dabei trennt der Druckumsetzer 24-das-zur Betätigung-des-Hydraulikzylinders-14 benötigte Hydrauliköl von dem Lösungsmittel. Hierzu besteht der Druckumsetzer 24 aus einem Edelstahlrohr 108, das durch eine verschiebbare, nicht permeable Trennmembrane 109 zwei Hohlräume 110. 111 trennt, wobei der erste Hohlraum 110 über die Ventilanordnung 21, 22 und die Druckleitung 20 mit der Laminarpumpe 5 verbunden ist und das Lösungsmittel enthält und der mit Hydrauliköl gefüllte zweite Hohlraum 111 mit dem Hydraulikzylinder 14 verbunden ist.

Um auf kostengünstige Weise ein schnelles Austauschen der zwischen Ober- und Unterteil 7 und 8 des Kanalmodules 2 angeordneten auswechselbaren Teile zu ermöglichen, wird die Druckplatte 16 von zwei Rückstellfedern 23 beaufschlagt, so daß bei einem Druckabbau des in dem Hydraulikzylinder 14 befindlichen Lösungsmittels die Druckplatte 16 in ihre Aufnahmeposition zurückgezogen wird.

Soll nun bei der in den Fig.1 und 2 dargestellten Vorrichtung 1 beispielsweise die Ultrafiltrationsmembran 10 ausgewechselt werden, wird der Pumpenfluß abgestellt und das Umschaltventil 22 in die Position "Waste" geschaltet (d.h. die zwischen dem Ventil 22 und dem Druckumsetzer 24 befindliche Leitung wird gelüftet). Dadurch wird der Druck in dem Druckumsetzer 24 reduziert und somit sekundär auch der Druck des Hydraulikzylinders 14 abgebaut und das Unterteil 8 des Kanalmodules 2 durch die Rückstellfedern 23 von dem Oberteil 7 getrennt. Das Unterteil 8 wird nun von der Druckplatte 16 genommen und die Membran 10 ausgetauscht. Anschließend wird das Unterteil 8 mit einer neuen Membran 10 auf die Druckplatte 16 gesetzt, das Umschaltventil 22 geschlossen, mit dem Schaltventil 21 verbunden und das Schaltventil 21 wieder geöffnet und der Pumpenfluß angestellt, so daß Lösungsmittel von der Laminarpumpe 5 in den Druckumsetzer 24 gelangt und den Hydraulikzylinder 14 mit einem Druck von beispielsweise 100 bar beaufschlagt. Dadurch wird die Druckplatte 16 wieder nach oben verschoben und das Unterteil 8 gegen das Oberteil 7 des Kanalmodules 2 mit einer vorgegebenen Anpreßkraft gedrückt. Anschließend wird das Schaltventil 21 geschlossen, so daß der Hydraulikzylinder 14 die Druckplatte 16 (unabhängig von dem für den Trennkanal 6 des Kanalmodules 2 benötigten Lösungsmittelstrom) weiter mit konstantem Druck beaufschlagt.

Die Erfindung ist selbstverständlich nicht auf das vorstehend beschriebene Ausführungsbeispiel beschränkt. So können insbesondere bei längeren Kanalmodulen auch mehrere Hydraulikzylinder sowie auch mehrere Rückstellfedern verwendet werden.

### Bezugszeichenliste

- 1: Vorrichtung
- 2: Kanalmodul
- 3: Halteeinrichtung
- 5: Laminarpumpe
- 6: Trennkanal
- 7: Oberteil
- 8: Unterteil
- 9: Abstandshalter
- 10: Membran, Ultrafiltrationsmembran
- 11: Fritte
- 12: Kammer
- 13: Gehäuse
- 13': obere Wandbereich
- 14: Hydraulikzylinder
- 15: Kolben
- 16: Druckplatte, Befestigungselement
- 17,18: Schenkel
- 19: Innenwand
- 20: Druckleitung
- 21: Schaltventile, Ventilanordnung
- 22: Umschaltventil, Ventilanordnung
- 23: Rückstellelement, Rückstellfeder
- 24: Druckumsetzer

- 100: Einlaß
- 101: Drucksensor
- 102: Leitung
- 103: Ventil
- 104: Fluß-Meßgerät
- 105: Auswerteeinrichtung
- 106: Ventil
- 107: Meßeinrichtung
- 108: Edelstahlrohr
- 109: Trennmembrane
- 110: (erste) Hohlraum
- 111: (zweite) Hohlraum

## Patentansprüche

1. Vorrichtung zur Feldflußfraktionierung mit einem einen Trennkanal (6) enthaltenden Kanalmodul (2), einer Halteeinrichtung (3) zur Fixierung des Kanalmodules (2) mittels hydraulisch betätigbarer Befestigungselemente (16) und mindestens einer Laminarpumpe (5) zur Erzeugung eines laminaren Lösungsmittelstromes eines die zu trennenden Partikel enthaltenden Lösungsmittels durch den Trennkanal (6) des Kanalmodules (2), wobei das Kanalmodul (2) ein Oberteil (7) und ein Unterteil (8) umfaßt und an dem Oberteil (7) bodenseitig ein die seitlichen Abmessungen des Trennkanales (6) definierender Abstandshalter (9) angeordnet ist, an den sich eine auswechselbare Membran (10) und eine Fritte (11) anschließen, mit den Merkmalen:
a) die Halteeinrichtung (3) besteht aus einem Gehäuse (13) mit einem oberen Wandbereich (13'), an dessen innerer Oberfläche sich das Oberteil (7) des Kanalmodules (2) abstützt;
b) in dem Gehäuse (13) der Halteeinrichtung (3) ist eine von mindestens einem Hydraulikzylinder (14) beaufschlagte Druckplatte (16) vorgesehen, an deren Oberseite sich das Unterteil (8) des Kanalmodules (2) abstützt, und welche axial von einer Aufnahmeposition, bei der mindestens das Unterteil (8) des Kanalmodules (2) sowie die auswechselbaren Teile (10, 11) aus der Halteeinrichtung (3) entnehmbar oder in diese einführbar sind, in eine Halteposition, bei welcher das Unterteil (8) gegen das Oberteil (7) des Kanalmodules (2) gedrückt wird, verschiebbar angeordnet ist;
c) der Hydraulikzylinder (14) ist über einen Druckumsetzer (24) und eine Ventilanordnung (21, 22) mit der Laminarpumpe (5) verbunden, wobei der Druckumsetzer 24 das zur Betätigung des Hydraulikzylinders 14 benötigte Hydrauliköl von dem Lösungsmittel trennt.

2. Vorrichtung nach Anspruch 1, **dadurch gekennzeichnet, daß** die Druckplatte (16) mit mindestens einem elastischen Rückstellelement (23) verbunden ist, so daß nach Abschalten der Druckquelle des Hydraulikzylinders (14) die Druckplatte (16) von dem Rückstellelement (23) in ihre Aufnahmeposition zurückgezogen wird.

3. Vorrichtung nach Anspruch 2, **dadurch gekennzeichnet, daß** es sich bei dem Rückstellelement (23) um eine Rückstellfeder handelt.

4. Vorrichtung nach einem der Ansprüche 1 bis 3, **dadurch gekennzeichnet, daß** zur Anpassung des durch die Laminarpumpe (5) erzeugten Druckes und der von der Druckplatte (16) aufzubringenden Anpreßkraft in die Druckleitung (20) ein Druckumsetzer (24) eingefügt ist.

5. Vorrichtung nach einem der Ansprüche 1 bis 4, **dadurch gekennzeichnet, daß** die Druckplatte (16) einen U-förmigen Querschnitt aufweist, derart, daß die beiden Schenkel (17, 18) an der Innenwand (19) des Gehäuses (13) entlang gleitend angeordnet sind.

6. Vorrichtung nach einem der Ansprüche 1 bis 5, **dadurch gekennzeichnet, daß** das Oberteil (7) des Kanalmodules (2) fest mit dem Gehäuse (13) der Halteeinrichtung (3) verbunden ist, so daß in der Aufnahmeposition der Druckplatte (16) lediglich das Unterteil (8) des Kanalmodules (2) mit der Fritte (11) und der Membran (10) aus der Halteeinrichtung (3) entnehmbar sind.

7. Vorrichtung nach einem der Ansprüche 1 bis 6, **dadurch gekennzeichnet, daß** der Druckumsetzer 24 aus einem Edelstahlrohr (108) besteht, das durch eine verschiebbare, nicht permeable Trennmembrane (109) zwei Hohlräume (110, 111) trennt, wobei der erste Hohlraum (110) über die Ventilanordnung (21, 22) und die Druckleitung (20) mit der Laminarpumpe (5) verbunden ist und das Lösungsmittel enthält und der mit Hydrauliköl gefüllte zweite Hohlraum (111) mit dem Hydraulikzylinder (14) verbunden ist.

## Claims

1. Apparatus for field flow fractionation, with a duct module (2) containing a separating duct (6), with a holding device (3) for fixing the duct module (2) by means of hydraulically actuable fastening elements (16), and with at least one laminar pump (5) for generating a laminar solvent stream of a solvent, containing the particles to be separated, through the separating duct (6) of the duct module (2), the duct module (2) comprising an upper part (7) and a lower part (8), and there being arranged on the upper part (7), on the bottom side, a spacer (9) which defines the lateral dimensions of the separating duct (6) and which is followed by an exchangeable membrane (10) and a frit (11), with the features:
a) the holding device (3) consists of a housing (13) with an upper wall region (13'), on the inner surface of which the upper part (7) of the duct module (2) is supported;
b) in the housing (13) of the holding device (3), a pressure plate (16) is provided which is acted upon by at least one hydraulic cylinder (14) and on the top side of which the lower part (8) of the duct module (2) is supported, and which is arranged so as to be displaceable axially from a reception position, in which at least the lower part (8) of the duct module (2) and the exchangeable parts (10, 11) can be removed from the holding device (3) or can be introduced into this, into a holding position, in which the lower part (8) is pressed against the upper part (7) of the duct module (2);
c) the hydraulic cylinder (14) is connected to the laminar pump (5) via a pressure converter (24) and a valve arrangement (21, 22), the pressure converter (24) separating the hydraulic oil required for actuating the hydraulic cylinder (14) from the solvent.

2. Apparatus according to Claim 1, **characterized in that** the pressure plate (16) is connected to at least one elastic restoring element (23), so that, after the pressure source of the hydraulic cylinder (14) has been switched off, the pressure plate (16) is drawn back into its reception position by the restoring element (23).

3. Apparatus according to Claim 2, **characterized in that** the restoring element (23) is a restoring spring.

4. Apparatus according to one of Claims 1 to 3, **characterized in that** a pressure converter (24) is inserted into the pressure line (20) for the adaptation of the pressure generated by the laminar pump (5) and of the pressure force to be applied by the pressure plate (16).

5. Apparatus according to one of Claims 1 to 4, **characterized in that** the pressure plate (16) has a U-shaped cross section, in such a way that the two legs (17, 18) are arranged so as to slide along on the inner wall (19) of the housing (13).

6. Apparatus according to one of Claims 1 to 5, **characterized in that** the upper part (7) of the duct module (2) is connected fixedly to the housing (13) of the holding device (3), so that, in the reception position of the pressure plate (16), only the lower part (8) of the duct module (2) with the frit (11) and with the membrane (10) can be removed from the holding device (3).

7. Apparatus according to one of Claims 1 to 6, **characterized in that** the pressure converter (24) consists of a high-grade steel tube (108) which separates two cavities (110, 111) by means of a displaceable impermeable separating membrane (109), the first cavity (110) being connected to the laminar pump (5) via the valve arrangement (21, 22) and the pressure line (20) and containing the solvent, and the second cavity (111) filled with hydraulic oil being connected to the hydraulic cylinder (14).

## Revendications

1. Dispositif pour le fractionnement de flux de champ comprenant un module de canal (2) contenant un canal de séparation (6), un dispositif de retenue (3) pour la fixation du module de canal (2) au moyen d'éléments de fixation (16) commandables hydrauliquement et au moins une pompe laminaire (5) pour générer un courant de solvant laminaire d'un solvant contenant les particules à séparer à travers le canal de séparation (6) du module de canal (2), le module de canal (2) comprenant une partie supérieure (7) et une partie inférieure (8) et un élément d'espacement (9) définissant les dimensions latérales du canal de séparation (6) étant disposé sur la partie supérieure (7) du côté du fond, une membrane remplaçable (10) et une fritte (11) se raccordant à l'élément d'espacement (9), comprenant les caractéristiques suivantes :
a) le dispositif de retenue (3) se compose d'un boîtier (13) avec une région de paroi supérieure (13'), sur la surface interne de laquelle s'appuie la partie supérieure (7) du module de canal (2) ;
b) dans le boîtier (13) du dispositif de retenue (3) est prévue une plaque de pression (16) sollicitée par au moins un cylindre hydraulique (14), sur le côté supérieur de laquelle s'appuie la partie inférieure (8) du module de canal (2), et qui est disposée de manière déplaçable axialement d'une position de réception dans laquelle au moins la partie inférieure (8) du module de canal (2) ainsi que les parties remplaçables (10, 11) peuvent être enlevées du dispositif de retenue (3) ou introduites dans celui-ci, dans une position de retenue dans laquelle la partie inférieure (8) est pressée contre la partie supérieure (7) du module de canal (2) ;
c) le cylindre hydraulique (14) est connecté par le biais d'un convertisseur de pression (24) et d'un agencement de soupape (21, 22) à la pompe laminaire (5), le convertisseur de pression (24) séparant l'huile hydraulique nécessaire pour l'actionnement du cylindre hydraulique (14) du solvant.

2. Dispositif selon la revendication 1, **caractérisé en ce que** la plaque de pression (16) est connectée à au moins un élément de rappel élastique (23), de sorte qu'après la déconnexion de la source de pression du cylindre hydraulique (14), la plaque de pression (16) soit ramenée dans sa position de réception par l'élément de rappel (23).

3. Dispositif selon la revendication 2, **caractérisé en ce que** l'élément de rappel (23) est un ressort de rappel.

4. Dispositif selon l'une quelconque des revendications 1 à 3, **caractérisé en ce que** pour l'adaptation de la pression produite par la pompe laminaire (5) et de la force de pression à appliquer par la plaque de pression (16) dans la conduite de pression (20), on insère un convertisseur de pression (24).

5. Dispositif selon l'une quelconque des revendications 1 à 4, **caractérisé en ce que** la plaque de pression (16) présente une section transversale en forme de U, de telle sorte que les deux branches (17, 18) soient disposées de manière à glisser le long de la paroi interne (19) du boîtier (13).

6. Dispositif selon l'une quelconque des revendications 1 à 5, **caractérisé en ce que** la partie supérieure (7) du module de canal (2) est connectée fixement au boîtier (13) du dispositif de retenue (3), de sorte que dans la position de réception de la plaque de pression (16), seulement la partie inférieure (8) du module de canal (2) avec la fritte (11) et la membrane (10) puissent être retirées du dispositif de retenue (3).

7. Dispositif selon l'une quelconque des revendications 1 à 6, **caractérisé en ce que** le convertisseur de pression 24 se compose d'un tube en acier noble (108) qui sépare deux cavités (110, 111) par une membrane de séparation (109) déplaçable et non perméable, la première cavité (110) étant connectée par le biais de l'agencement de soupape (21, 22) et de la conduite de pression (20) à la pompe laminaire (5) et contenant le solvant et la deuxième cavité (111) remplie d'huile hydraulique étant connectée au cylindre hydraulique (14).
